# EUROPEAN PATENT APPLICATION

(11) **EP 2 784 669 A1**
(43) Date of publication of application: **01.10.2014**
(21) Application number: 13462008.7
(22) Date of filing: 19.12.2013
(51) Int. Cl.: G06F 9/445, G06F 9/44, H04M 1/725

(54) **Method, system and computer program product for handling needs for, and delivery of customized and/or personalized user interface elements**

(30) Priority: 26.03.2013 HU 1300176
(71) Applicant: Kiss, Laszlo, 1016 Budapest (HU)
(72) Inventor: Kiss, Laszlo, 1016 Budapest (HU)
(74) Representative: Mak, Andras

(57) **Abstract**

The application refers to a method, a system and a computer program product for handling needs for and delivering of customized and/or personalized user interface elements for applications to communications devices or mobile computing devices. The method comprises:
collecting user desires for a specific Customization and/or Personalization of the UI set,
delivering, to a Communications Device or Mobile Computing Device on which the Application is installed or running, availability information related to different Customized and/or Personalized UI sets, and

delivering, to a Communications Device or Mobile Computing Device on which the Application is installed or running, one or more, Default or Customized and/or Personalized, UI sets not included as Default UI sets of the Applications.

The system comprises means for performing the method. The computer program product comprises program code means adapted to perform the method.

## Description

### Background of the invention

### 1. Technical Field

The present invention relates in general to Applications installed and running on Communications Devices or Mobile Computing Devices, and in particular to satisfying the need of Users to be able to have customized and/or personalized ways of use of these various Applications. Still more particularly, the present invention relates to the collection of such needs and delivery of the Customized and/or Personalized User Interface element sets (UI sets) of Applications to the Communications Devices or Mobile Computing Devices, separately from the remaining functional components and/or from the Default provided User Interface element sets.

### 2. Description of the Related Art

Communications Devices or Mobile Computing Devices are not only increasingly used worldwide, but also by a large variety of users demanding the possibility of customizing the User Interfaces of the Applications to their language, cultural habits, to actual trends and fashion, to the internal usage regulations of an enterprise, or even demanding a personalization to individual personal wishes.

In development, releasing and distributing of Applications worldwide, however, the Application Developers are able to provide only a limited number of default User Interface sets, usually a few different standard language translations of the default User Interface, and they do not have the required market knowledge about the needs, nor the necessary resources to be able to produce and release all the desired Customized and/or Personalized UI sets.

Such collecting and analyzing of the needs for, and creation of Customized and/or Personalized UI sets is usually out of scope of the Application Developers.

Advertising and distributing of eventually existing Customized and/or Personalized UI sets is usually very difficult for the Application Developers, therefore it is also out of scope.

It would be desirable, therefore, to provide a mechanism and a system for collecting the needs for customizations and/or personalization, and for dynamic delivery of different Customized and/or Personalized UI sets separate from the distribution of the Applications.

For the delivery of some elements of the User Interface, more specifically for delivery of text translations, several different solutions have been suggested.

For example US patent No. 6,334,101 B1 discloses a system and computer program for dynamic delivery of human translations during software operation. This document describes a system and computer program for multilingual support for data processing system software. When the language setting of the Operating System of the data processing system is changed, the user interface language of the running application(s) is dynamically changed consequently. If the necessary human translation text file is not available locally, it will be, if available, downloaded and used automatically. This method makes possible to deliver text string only, and all applications may receive the same language translations. This method does not make possible to have different languages for the different applications, does not make possible the customization of the text strings, and localized versions may be produced only by the developers of the different applications. This method does not mention other User Interface elements, such as voices, gestures, etc.

US patent No. 6,490,547 B1 discloses a method, a system and a computer program for just in time localization, which makes possible the transmission during run time of a translation request containing a text string to be translated, with identifying the source and the target language to a web server, receiving the translated text string, and finally apply it within the application's user interface. This method makes only possible a run time, string-by-string translation, does not deliver a complete User Interface set to the device. It also does not make possible to customize the translations. Additionally it treats only text string, does not offer solution for the other elements of a User Interface.

### Glossary

**Communications Device:** a portable, mobile or fixed device which offers the possibility to be used for voice, data or video communications, and additionally to personal, business or entertainment purposes, and which may offer locally stored, downloaded, broadcasted or streamed media content to its user. The Communications Device usually has an Operating System, with a variety of preinstalled features, functions and applications, and offers the possibility for its user or to a third party, to install and run additional applications.
**Mobile Computing Device:** a portable or mobile device which may be used for personal, business or entertainment purposes. The device may offer locally stored, downloaded, broadcasted or streamed media content to its user, and additionally may offer the possibility to be used for voice, data or video communications, The Mobile Computing Device usually has an Operating System, with a variety of preinstalled features, functions and applications, and offers the possibility for its user or to a third party, to install and run additional applications.
**User Interface set (UI set):** User Interface of an application are usually built from various elements of various types (menus, texts, help files, graphical elements, sounds, voice prompts, gestures, etc.). A User Interface set (UI set) is a conglomerate of all the necessary and sufficient elements needed for the unlimited usages of all the functions and features of the application.
**Default UI set:** A UI set provided by the developer or distributor of the application, intended for broad user groups of the application.
**Customized and/or Personalized UI set:** A UI set, which is based on a Default UI set, but one, more, or all the elements were altered. Altering a UI set element may be materialized by changing the language of menus, texts, or changing the tonality or mood of the menus, texts, or changing the voice prompts, sounds, etc. The purpose of customizing and/or personalizing of the UI set is to obtain a new version of it, which makes the usage of the application possible, or more comfortable, or more fashionable (etc.) for the user. Enterprises may provide their employees with Customized UI sets using company standard wordings, sounds, graphics, different user groups may also build their own Customized UI set, and it is even possible for a family or a single person to create a Personalized UI set.
**Active UI set:** An application may be distributed with one or several Default UI sets, and the user may add several additional Default or Customized and/or Personalized UI sets. Nevertheless at one moment one single UI set is actively used by the application to communicate with the user. This is called Active UI set.
**OS Market:** This is the application and/or media content market run by the owner (manufacturer, developer) of the OS running on the Communications or Mobile Computing Device. From the point of view of the Device, this resides somewhere on the Internet, its place, technology, etc. are unconcerned.
**OS Independent Markets:** These are the application and/or media content markets run by companies which are independent from the owner (manufacturer, developer) of the OS running on the Communications or Mobile Computing Device. From the point of view of the Device, these reside somewhere on the Internet or on an Intranet, their place, technology, etc. are unconcerned.
**Enterprise Server: Enterprise Internal Application Repository:** This consists of one or several company-internal application and/or media repositories, storing content from various sources. From the point of view of the Device, these reside somewhere on the Intranet, their place, technology, etc. are unconcerned.

### Summary of the invention

It is therefore one object of the present invention to provide an improved method, system and computer program product for supporting higher level customization and/or personalization of use of Communications Devices or Mobile Computing Devices.

It is another object of the present invention to provide an improved method, system and computer program product for collecting and handling the customization and personalization needs of the Users of various Applications.

It is another object of the present invention to provide an improved method, system and computer program product for distributing or delivering the Customized and/or Personalized User Interface element sets.

The foregoing objects are achieved as described below.

User Interface elements (menus, texts, help files, graphical elements, sounds, voice prompts, gestures, etc.) are implemented in software components separate from the functional components containing all the functions which are independent of the effective user of the Application. The Application may be then distributed, installed and used with one or several Default User Interface sets.

Users' needs for Customized and/or Personalized User Interface sets may be collected by servers on the Internet or by Enterprise servers, and forwarded to a Provider of Customized and/or Personalized User Interface sets.

This Provider of Customized and/or Personalized User Interface sets offers for distribution or delivery a continuously increasing number of Customized and/or Personalized User Interface sets, for an increasing number of Applications.

This Provider of Customized and/or Personalized User Interface sets will also be able to analyze the different collected needs, and then create, based on the results of the analysis, the various new Customized and/or Personalized User Interface sets, and make them available for distribution or delivery.

Once the desired Customized and/or Personalized User Interface sets are available, the Communications Devices or Mobile Computing Devices of the Users will be able to download them, either manually controlled by the User, either automatically.

The servers that realize all the mentioned functionalities (Servers on the Internet, Enterprise Servers, Servers of the Provider of Customized and/or Personalized User Interface sets) may be located on any part of the public Internet, in a Public Cloud, anywhere in a Private (Enterprise) Network or in a Private Cloud. In all cases the servers may be either physical, either virtual servers.

Once a given Customized and/or Personalized User Interface set is locally available on their Communications Device or Mobile Computing Device, the Users will be able to activate and use them in the Application or Applications for which the respective User Interface set id intended for.

The above as well as additional objects, features and advantages of the present invention will become apparent in the following detailed written description.

### Brief Description of the drawings

The novel features believed characteristic of the invention are set forth in the appeared claims. The invention itself however, as well as possible modes of use, further objects and advantages thereof, will best be understood by reference to the following detailed description of an illustrative embodiment when read in conjunction with the accompanying drawings, wherein:
**Fig. 1** depicts a block diagram of a Communications Device or a Mobile Computing Device on which an embodiment of the present invention may be implemented.
**Fig. 2a to 2d** **and** **Fig. 3** are diagrams of layering or segregating Customized and/or Personalized User Interface sets to facilitate dynamic change of User Interface sets in accordance to the embodiment of the present invention.
**Fig. 4** is a diagram of information flow of dynamic User Interface set delivery in accordance to the embodiment of the present invention.
**Fig. 5** is an example diagram of result of setting of User Interface sets of Applications on a Communications or Mobile Computing Device, in accordance to the embodiment of the present invention.
**Fig. 6** is a diagram of mechanism of setting and dynamic delivery of User Interface sets in accordance to the embodiment of the present invention.
**Figs. 7 to 10** are high level flowcharts for processes of dynamic User Interface sets delivery in accordance to the embodiment of the present invention.

### Detailed description of the embodiments

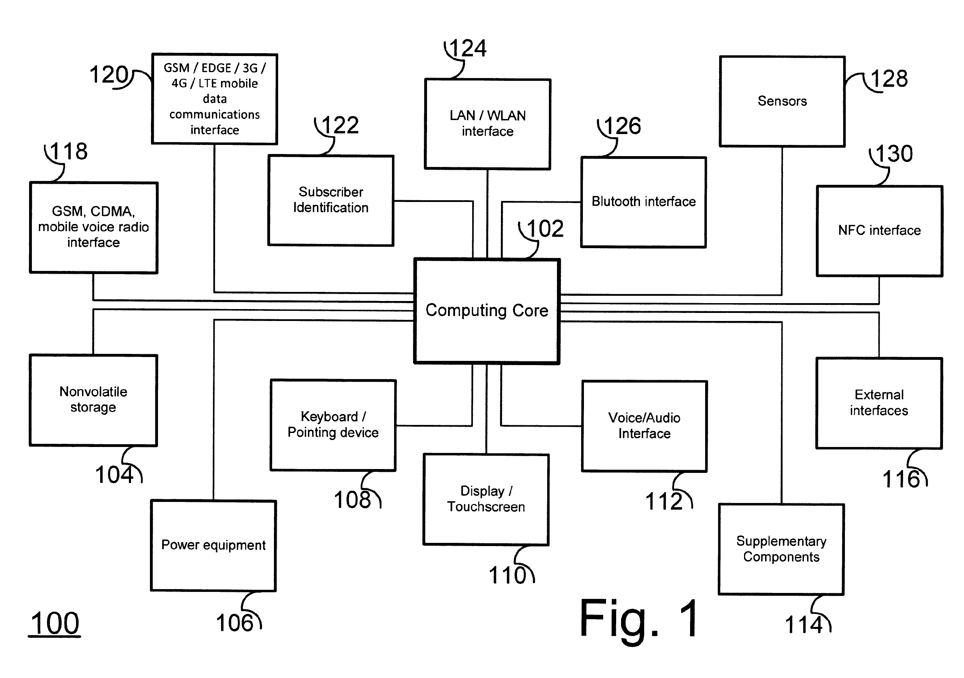

With reference now to the figures, and in particular with reference to **Fig. 1****,** a block diagram of a Communications or a Mobile Computing Device on which an embodiment of the present invention may be implemented is depicted. A Communications or Mobile Computing Device **100** may be a full or partial implementation of the block diagram depicted in **Fig. 1** The central part of the Communications or Mobile Computing Device is a Computing Core **102,** which provides all the computing elements, for example CPU, GPU, RAM, internal data and communications buses, chipsets, etc.

A Communications or a Mobile Computing Device includes several other elements connected to the central core. These are: non-volatile storage **104** (example: internal memory, SD card, etc.), power equipment **106** (example: battery, charging interface, solar panel, fuel cell, etc.), Keyboard/pointing device **108,** display/touchscreen **110,** voice/audio interfaces **112,** supplementary components **114** (example: front/rear camera, FM radio, TV receiver, infrared emitter/receiver), and external interfaces **116** (example: USB port, HDMI or other video output, vendor-specific connection ports, etc.). The other elements connected to the central core are radio interface for mobile voice **118** (example: GSM, CDMA, 3G, etc.), radio interface for mobile data connection **120** (example: GSM, EDGE, 3G, LTE, etc.), Subscriber Identification subsystem **122** (example: SIM card reader, integrated subscriber Id equipment, etc.), LAN/WLAN interface **124** (example: WiFi, Ethernet, etc.), Bluetooth interface **126,** sensors **128** (example: GPS, accelerometer, light, proximity, magnetic, thermic, pressure, orientation, humidity sensors, gyroscope, etc.), and NFC **130.**

Several of the above mentioned elements may or may not exist in the case of a concrete Communications Device or Mobile Computing Device. Therefore the exemplary embodiment of a Communications or Mobile Computing Device shown in **Fig. 1** is provided solely for the purpose of explaining the invention and those skilled in the art will recognize that numerous variations are possible, both in form and function.

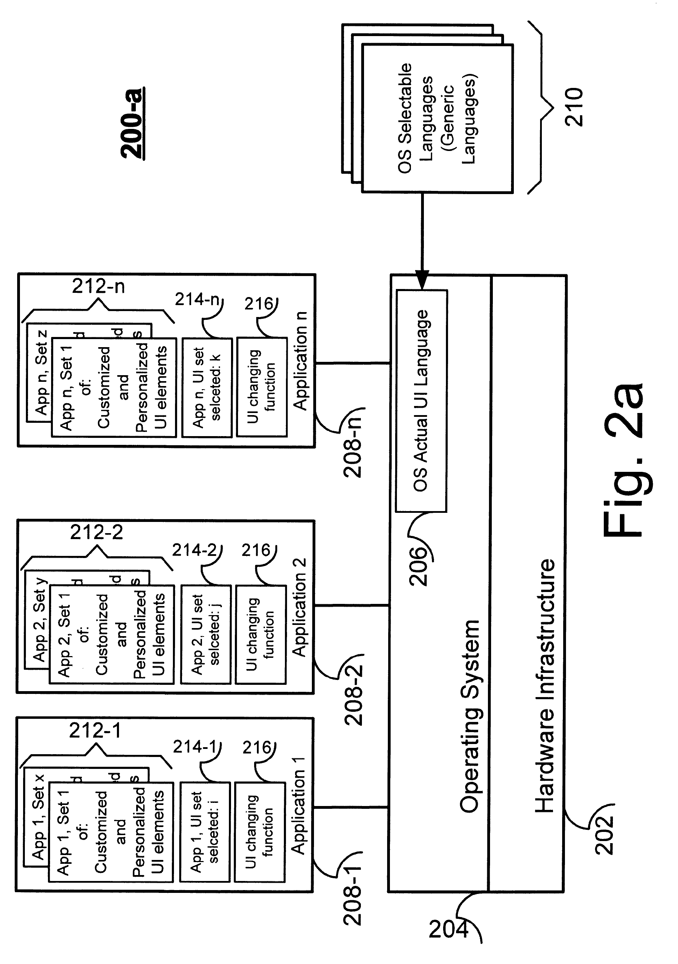

Referring to **Fig. 2a****,** it represents a diagram of layering or segregating Customized and/or Personalized User Interface sets to facilitate dynamic change of User Interface sets through UI changing function assigned (embedded, linked, plugged-in, etc.) to Applications, in accordance to the embodiment of the present invention. Those skilled in the art will recognize that numerous variations of assigning a function to an application are possible, both in form and function.

As it is known in the art, an Operating System **204** is running on the Hardware Infrastructure **202,** a representation of the Communications Device or Mobile Computing Device **100** described on **Fig. 1****.** The Operating System offers to the User of the Device a set of Generic Languages **210.** User may choose from these, and set the OS Actual Language **106,** which selection determines the language of the User Interface of the Operating System itself, and the default settings of the Applications running on the Device.

Applications **208-1, 208-2, ... 208-n** run on Operating System **204.** Applications **208-1, 208-2, ... 208-n** typically include one or more User Interface sets (texts, menus, prompts, help texts, buttons, pictures, themes, sounds, voice prompts, gestures, etc.). Those skilled in the art will recognize that numerous variations of User Interface sets are possible, both in form and function.

Applications **208-1, 208-2, ... 208-n** contain each their own set of Default UI sets and Customized and/or Personalized UI Sets, **212-1 (1 to x), 212-2 (1 to y),...212-n (1 to z)** respectively, and for each Application the User is allowed to set using the Application-assigned UI changing function **216** a preferred UI set, **214-1 (set i), 214-2 (set j), ...214-n (set k)** respectively. In **Fig. 2a** those skilled in the art will recognize, that each Application may run on a different language, with its own customization, with language settings being potentially different from each other, and different from the OS setting.

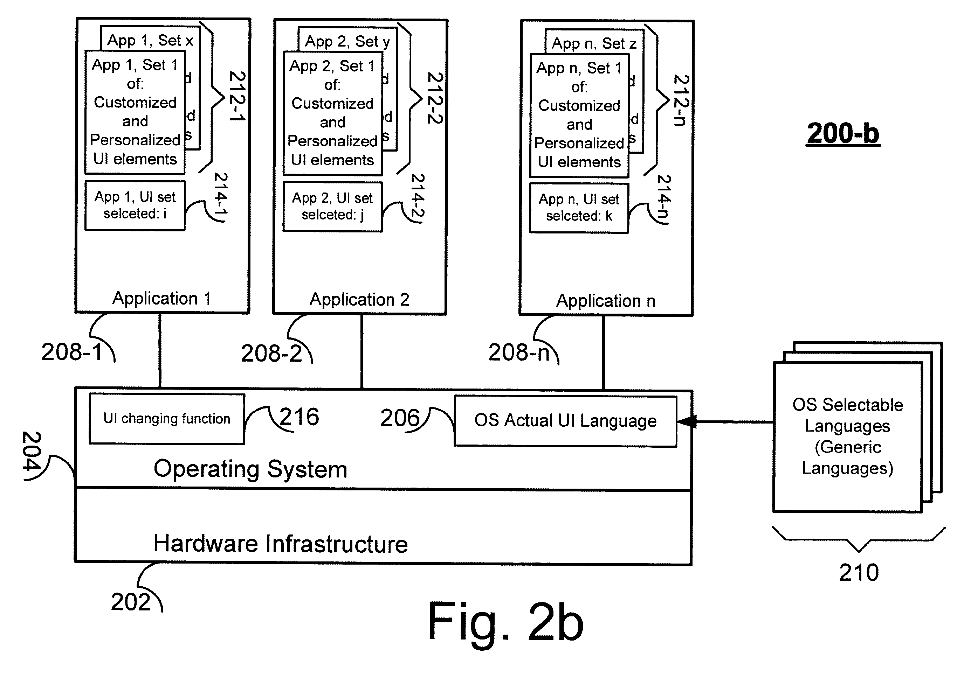

Referring to **Fig. 2b****,** it represents a diagram of layering or segregating Customized and/or Personalized User Interface sets to facilitate dynamic change of User Interface sets through UI changing function assigned (embedded, linked, plugged-in, etc.) to the Operating System, in accordance to the embodiment of the present invention. Those skilled in the art will recognize that numerous variations of assigning a function to an Operating System are possible, both in form and function.

Functioning is very similar to the one presented at **Fig. 2a****.** The main difference is, that for each Application the User is allowed to set using the OS-assigned UI changing function **216** a preferred UI set, **214-1 (set i), 214-2 (set j), ...214-n (set k)** respectively. In **Figure 2b** those skilled in the art will recognize, that each Application may run on a different language, with its own customization, with language settings being potentially different from each other, and different from the OS setting.

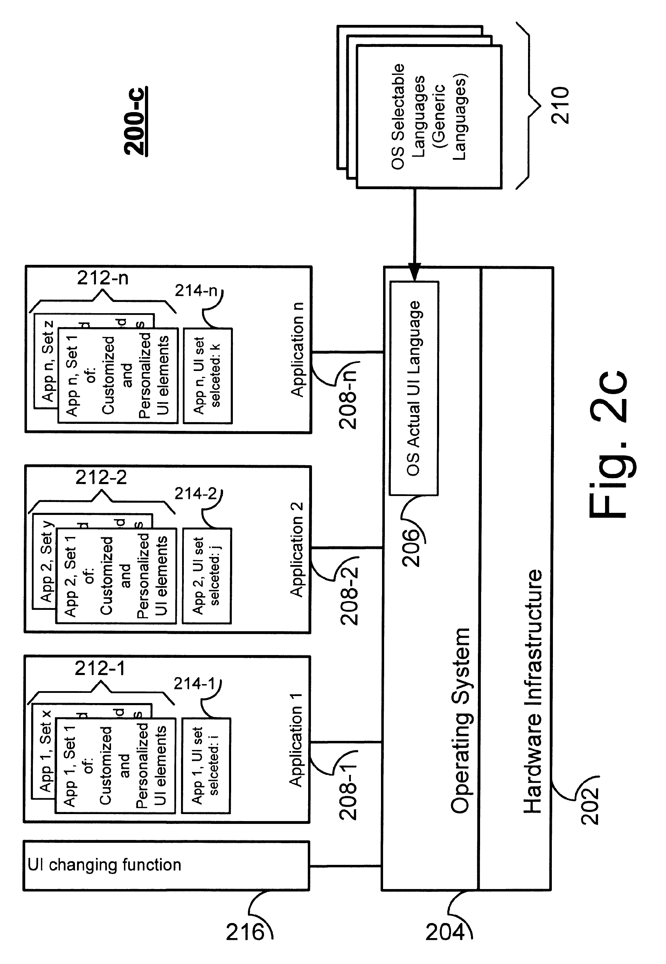

Referring to **Fig. 2c****,** it represents a diagram of layering or segregating Customized and/or Personalized User Interface sets to facilitate dynamic change of User Interface sets through UI changing function realized as a separate application **216** running on the OS, in accordance to the embodiment of the present invention. Those skilled in the art will recognize that numerous variations of assigning a function to an Operating System are possible, both in form and function.

Functioning is very similar to the one presented at **Fig. 2a****.** The main difference is, that for each Application the User is allowed to activate the separate application which realizes the UI changing function **216,** and set a preferred UI set, **214-1 (set i), 214-2 (set j), ...214-n (set k)** respectively. The respective Application for which the UI changing function has been initiated may or may not be running during the change process. This will depend on the particular properties of the Application itself and/or will depend on the actual realization of the separate application which incorporates the UI changing function. In **Fig. 2c** those skilled in the art will recognize, that each Application may run on a different language, with its own customization, with language settings being potentially different from each other, and different from the OS setting.

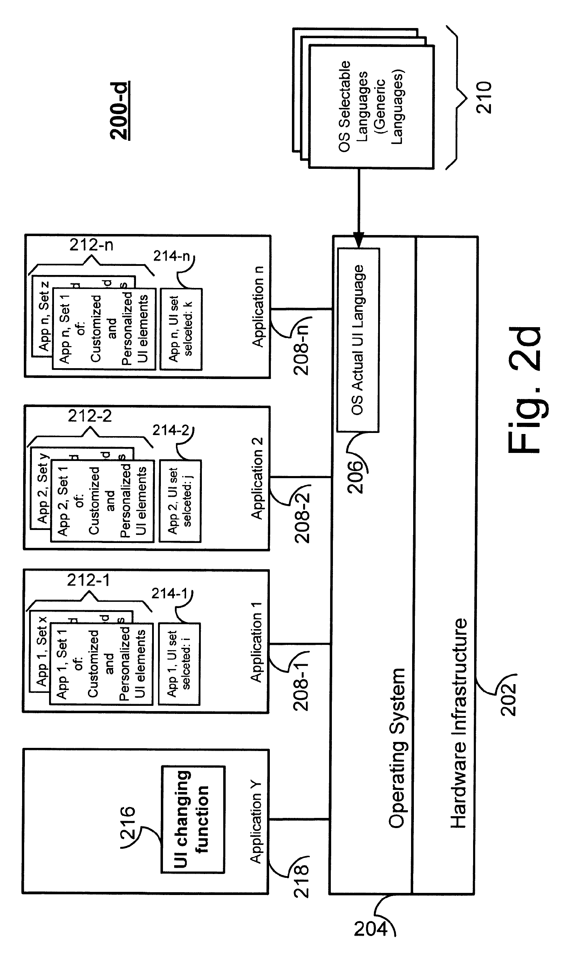

Referring to **Fig. 2d****,** it represents a diagram of layering or segregating Customized and/or Personalized User Interface sets to facilitate dynamic change of User Interface sets through UI changing function **216** assigned (embedded, linked, plugged-in, etc.) to a different Application **218,** running on the OS, in accordance to the embodiment of the present invention. The Application **218** which incorporates the UI changing function **216** is different than the Applications **208-1, 208-2,..208-n,** for which the UI changing function **216** may be activated. Those skilled in the art will recognize that numerous variations of assigning a function to an Application are possible, both in form and function.

Functioning is very similar to the one presented at **Fig. 2a****.** The main difference is, that for each Application **208-1, 208-2,...208-n** the User is allowed to activate the UI changing function **216** assigned to a separate application **218,** and set a preferred UI set, **214-1 (set i), 214-2 (set j), ...214-n (set k)** respectively. The respective Application **208-1, 208-2,...208-n** for which the UI changing function **216** has been initiated may or may not be running during the change process. This will depend on the particular properties of the Application **208-1, 208-2,...208-n** itself and/or will depend on the actual realization of the other application **218** which incorporates the UI changing function **216.** In **Figure 2d** those skilled in the art will recognize, that each Application **208-1, 208-2,...208-n** may run on a different language, with its own customization, with language settings being potentially different from each other, and different from the OS setting.

The details provided in **Figs. 2a,** to **2d** are provided solely for the purpose of explaining the invention, and those skilled in the art will recognize that numerous variations are possible, both in form and function.

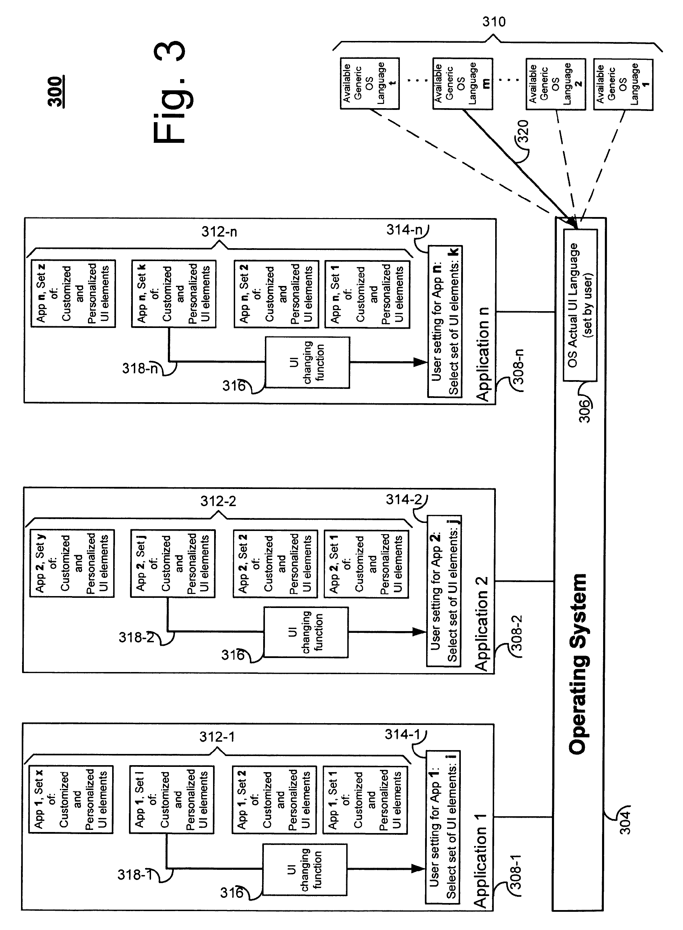

**Fig. 3** is a more detailed version of **Fig. 2a****.** The OS Actual Language **306** of the Operating System **304** is set by the embedded mechanism **320** of the OS. In this example the OS offers **t** different languages, and the user choses language **m** to be used by the OS. **Application 1 (308-1)** offers a set of **1 to x** of Customized UI Sets. User starts the UI setting function **316,** and makes the choice **318-1,** which implies Application 1 to use the UI set **i.** With a similar method User may apply the UI set to be used for each Application under control of the UI setting function **316.** The result will be that each Application may have its own customized User Interface settings, even with different languages and different customizations. Language settings of each Application may be completely different from the OS setting **306.**

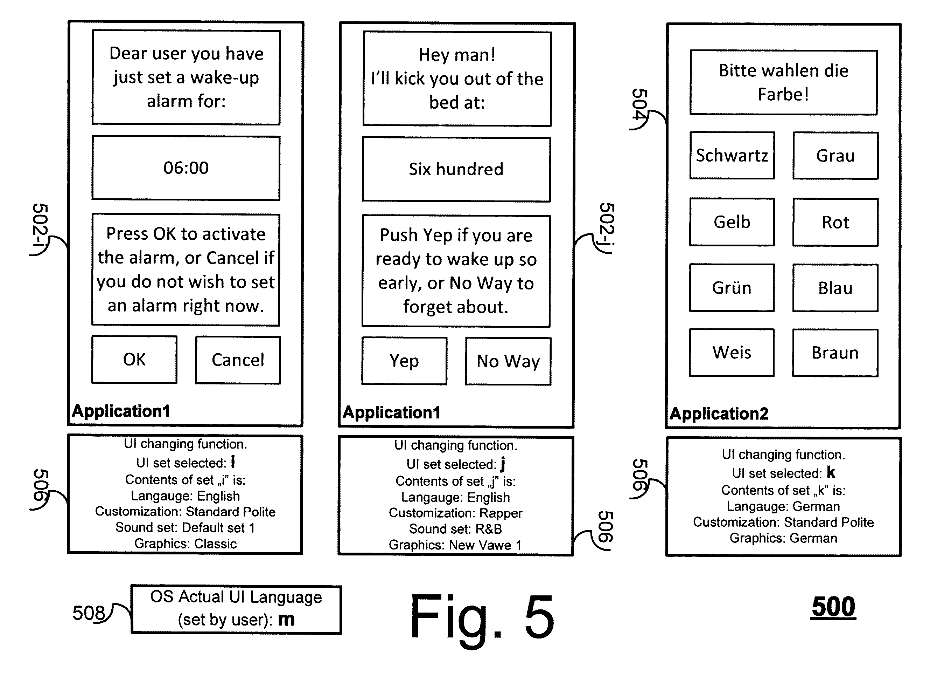

The result of this setting process is shown in **Fig. 5****,** an example diagram of result of setting of User Interface sets of Applications on a Communications Device or a Mobile Computing Device, in accordance to the embodiment of the present invention.

**Fig. 5** shows two different setting possibilities for the User Interface for Application1, **502-i** and **502-j.** When User activates UI changing function **506,** and choses **UI set i** as Active, User Interface of Application1, case **502-i** will be customized in according to the settings chosen. Open-eyed readers will observe, that in this case the manner of how Application1 case **502-i** communicates with the user is completely different from the one when User choses **UI set j** as Active, and therefore completely changes the User Interface of Application, case **502-j.**

Open-eyed readers will observe, that Application2 **504** is set to a completely different User Interface type **506,** where not only the language is independently set, but also the manner and other customization elements as well.

Open-eyed readers will observe, that settings of Application1 and Application2 are fully independent from the language setting **508** of the OS, which may be for example French, Japanese, Hungarian, or any other language, even one similar to Application1 or Application2.

So far only the cases when required UI set is available locally on the Communications Device or Mobile Computing Device were treated.

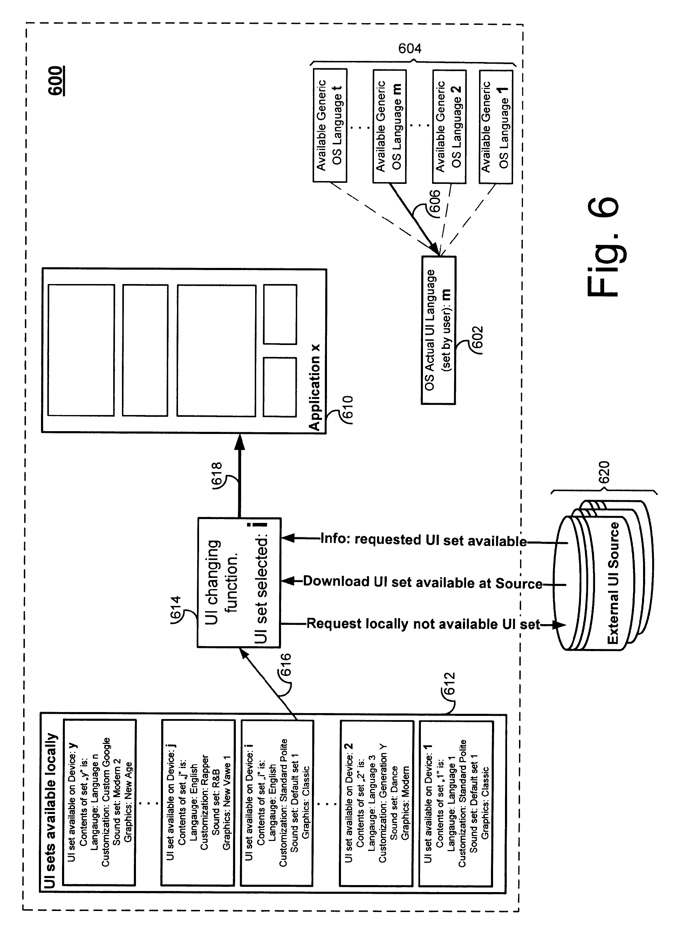

**Fig. 6** helps understand the process when the requested UI set is not available on the Device. The so far described method is: User browses with the UI changing function **614** the list of locally available UI sets **612,** makes its choice for UI set i **616.** This choice is loaded **(618)** into Application x **(610),** while OS language **602** is set with method **606** by choosing from available languages list **604.**

When customer wishes to use a customized UI set which is not available locally on the Device, the UI changing function turns to External Sources **620,** sending a request for the required UI set. If the required UI set is available on any of the External Sources **620,** it is offered to be downloaded. External Sources are understood as any source not locally on the Device. After being downloaded, the newly available UI set will be ready to use, the UI changing function will be able to set it Active.

If the requested customized UI set is not available on neither of the External Sources, the User can send a request to be informed when the requested UI set will be available. When the requested UI set becomes available, it will be downloaded (by push or pull method), and made available for Activation by the UI changing function.

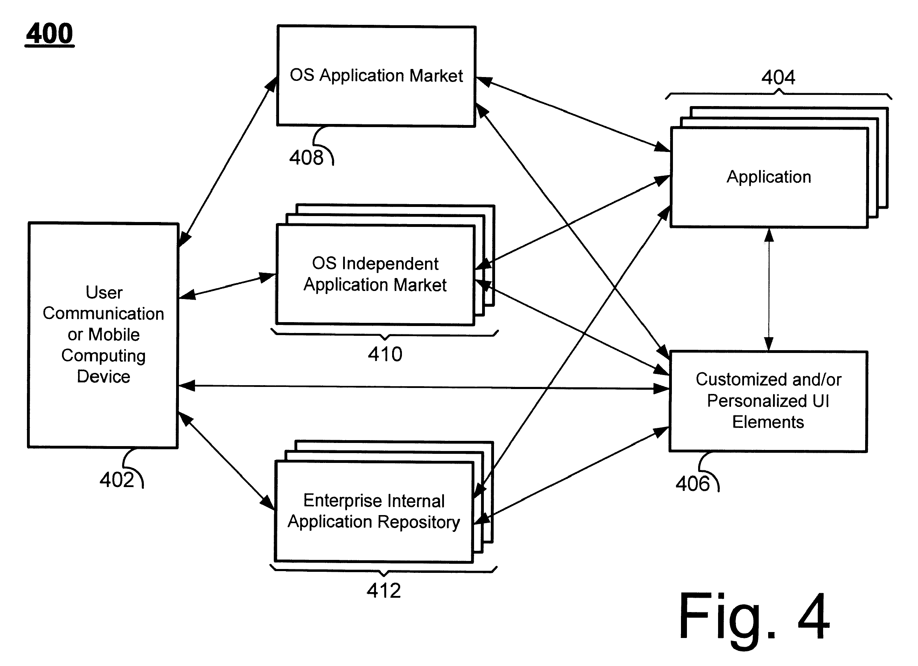

Referring to **Fig. 4** a diagram of information flow of dynamic User Interface elements delivery in accordance to the embodiment of the present invention, several sources may be available for the User. Choice of the source may be done by the User, the Application (or its developer), by the OS license owner, by external Application Markets and Repositories, or by the Provider of the Customized and/or Personalized UI sets.
According to this **Fig. 4****,** Customized and/or Personalized UI sets **406** may be distributed directly to the User Device **402** by their provider.

One can observe the Customized and/or Personalized UI sets **406** may also be distributed by their supplier to the developer(s) of the Application **404,** and distributed with the Application **404** directly to the User Device **402,** or via public Applications Markets **(408, 410)** or via private Enterprise Application Repositories **412.**

An other way to distribute the Customized and/or Personalized UI sets **406** is to deploy them to the OS Application Market **408,** or to one of the OS Independent Application Markets **410,** and then deploy them to the User Device **402.**

The UI sets may be customized to the requirements of an enterprise. In this case The Customized UI sets are deployed to an Enterprise Internal Repository **412,** and then deployed to the User Device **402.** In this way enterprises will have the possibility to create and deploy private UI versions, with own terminology, sounds, graphical elements, etc.

Open-eyed readers will observe, that the UI changing function, an embodiment of the present invention, offers the possibility to alter the OS implied default User Interface settings of any Application into a Customized or Personalized User Interface. The UI changing function offers also a return to the OS implied defaults.

Several different User Interfaces implementations, several OS language setting methods, and several Application customization methods are possible, therefore the exemplary embodiment of UI changing function described above is provided solely for the purpose of explaining the invention and those skilled in the art will recognize that numerous variations are possible, both in form and function.

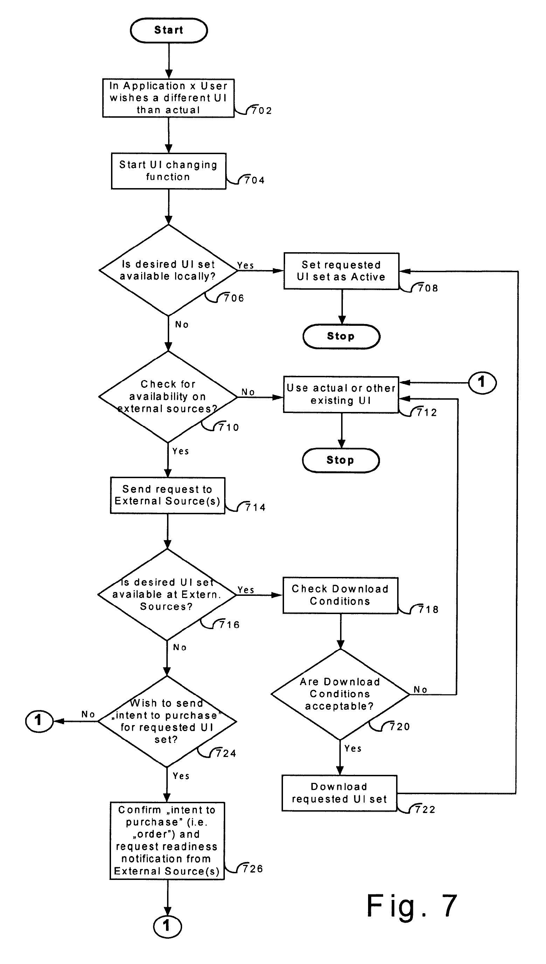

With reference now to **Fig. 7****,** a high level flowchart for a process of setting, delivering and requesting of UI sets in accordance with an embodiment of the present invention is depicted.

The process begins at step **702,** which illustrates the UI change request initiated by the User. The process next passes to step **704,** in which the UI changing function is initiated, and the requested UI settings are compared to the existing UI sets, than to step **706,** which determines whether the desired UI set is available locally. If so, the process proceeds to step **708,** by setting the desired UI set as Active. If not, the process proceeds to step **710** in which the User shall choose whether shall the process check External Sources for the availability of the desired UI set. If not, than the process proceeds to step **712,** in which the UI changing function offers the possibility of use and set of any locally existing UI sets, and the process ends. If so, than the process proceeds to step **714,** in which the process sends request of the desired UI set to predefined External Sources (see **Figure 4** for details), and checks the answers in step **716** the availability of the desired UI set.

If the desired UI set is available at the External Sources, the process requests the download conditions in step **718.**

Download (usage) conditions may be license conditions, a price, a recurrent usage fee, payment method, any other kind of compensation method, age, group membership, etc. It may be also possible, that the download conditions are compensated by a third person as a kind of gift, recompense, etc. In such a case the download conditions verification means mainly but not exclusively checking if the User is the one for whom the arrangement has been done.

Many different usage (download) conditions and their compensation are possible, therefore the exemplary embodiment of download conditions described above is provided solely for the purpose of explaining the invention and those skilled in the art will recognize that numerous variations are possible, both in form and function.

Once the download conditions are available, in step **720** the process asks the customer if the download conditions are accepted. If the UI download conditions are not acceptable, the process proceeds to step **712,** in which the UI changing function offers the possibility of use and set of any locally existing UI sets, and the process ends. If the UI download conditions are acceptable for the user, the process proceeds to downloading the desired UI set in step **722.** Once the desired UI set has been downloaded, the process steps back to step **708** setting the downloaded desired UI set as Active.

If the desired UI set is not available at the External Sources, the process proceeds to step **724** which determines the User's intent to purchase the desired UI set if it will be available later. If the User's intent is to purchase the desired UI set when it will be available at later time, the process in step **726** sends an intent confirmation to the External Source, and requests a readiness notification. If the User does not have the intent to purchase the desired UI when it becomes available, the process proceeds to step **712,** in which the UI changing function offers the possibility of use and set of any locally existing UI sets, and the process ends.

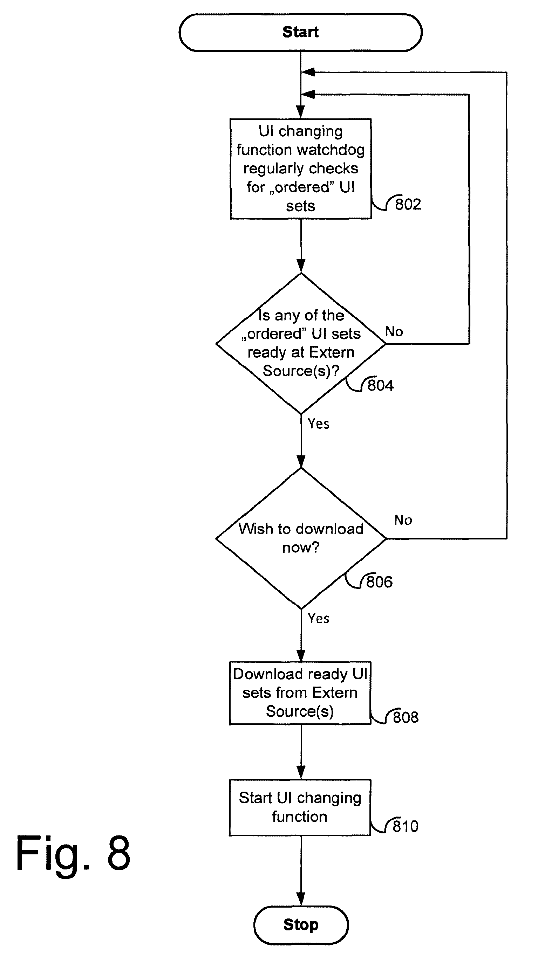

With reference now to **Fig. 8**, a high level flowchart for a process of dynamic delivery with pull method of UI sets in accordance with an embodiment of the present invention is depicted.

The process begins at step **802** in which a "watchdog" function of the UI changing function regularly checks the External Sources about the availability of new UI sets at the Sources. The process than in step **804** determines if any of the UI sets for which the User has sent intent to purchase are available. If not, the process reinitiates at step **802.**

If new, pre-ordered UI sets are available at the External Source(s), the process in step **806** determines if the User wishes to download now. If not, the process reinitiates at step **802.**

If the User wishes to download the newly available UI set, the process proceeds to step **808,** downloading the newly available UI set. After the UI set has been downloaded, the process in step **810** initiates the UI changing function, making possible to set as active the newly downloaded, or any locally available UI set, as described on **Fig. 7****.**

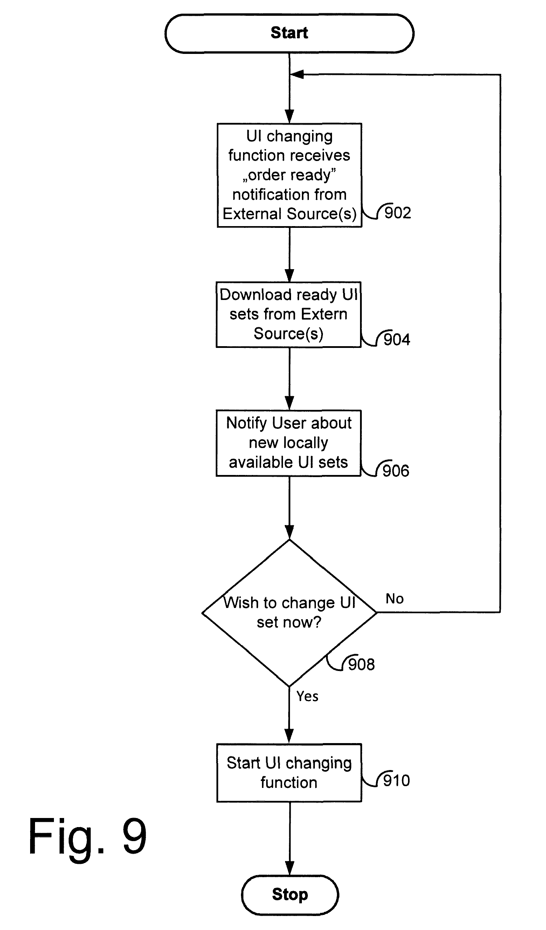

Referring now to **Fig. 9****,** a high level flowchart for a process of dynamic delivery with push method of UI sets in accordance with an embodiment of the present invention is depicted.

The process begins at step **902** in which the UI changing function receives a notification from External Sources about the availability of new UI sets at the Sources for which the User has previously expresses their intent to purchase (i.e. pre-ordered). The process than in step **904** downloads the newly available UI sets.

When download of the UI sets has finished, the process in step **906** notifies the User about the local availability of UI sets the User has previously expresses intent to purchase.

The process than determines in step **908** if the User wishes to change immediately the Active UI set. If so, the process in step **910** initiates the UI changing function, making possible to set as active the newly downloaded, or any locally available UI set, as described on **Figure 7****.** If not, than the process re-initiates at step **902.**

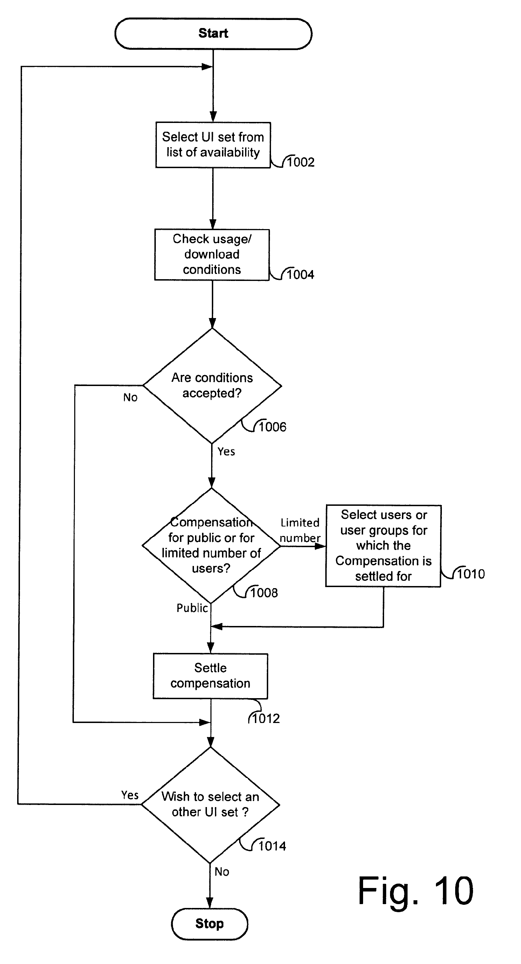

Referring now to **Fig. 10****,** a high level flowchart for a process of settlement by a third person of usage/download conditions of UI sets in accordance with an embodiment of the present invention is depicted.

The process begins at step **1002** in which the conditions settling user selects the UI set he/she is willing to settle the usage/download conditions. The process then in step **1004** allows the user to check the download conditions of the selected UI set.

The process than determines in step **1006** if the User accepts the download (usage) conditions. If the download conditions are not accepted by the user, the process then steps to step **1014** determining whether the user wishes to select an other UI set.

If the user in step **1006** accepts the download conditions, the process steps to step **1008** determining if the user wishes to settle the compensation for the download (usage) conditions for public use (i.e. for everybody who wishes to use the specific UI set), or wishes to settle only for a restricted number of users or a restricted number of user groups.

If in step **1008** the user decides to settle for public use, the process steps immediately to the settlement of the compensation in step **1012.** If in step **1008** the user decides to settle compensation for a restricted number of users or restricted number of user groups, the process steps to step **1010,** in which he/she will be able to select the users or user groups for which the settlement will be done.

After the users and/or user groups were selected, the process steps to settlement of the conditions in step **1012.**

After the download (usage) conditions have been settled for the selected UI set, the process determines in step **1014** whether the user wishes to select an other UI set. If so, the process reinitiates at step **1002.** If not, then the process ends.

While the invention has been particularly shown and described with reference to embodiments shown in the drawing, it will be understood by those skilled in the art that various changes in form and detail may be made therein without departing from the spirit and scope of the invention, which is defined by the following claims.

## Claims

1. A method of delivering Customized and/or Personalized User Interface sets for Applications to Communications Devices or Mobile Computing Devices, comprising:
collecting user desires for a specific Customization and/or Personalization of the UI set,
delivering, to a Communications Device or Mobile Computing Device on which the Application is installed or running, availability information related to different Customized and/or Personalized UI sets, and
delivering, to a Communications Device or Mobile Computing Device on which the Application is installed or running, one or more, Default or Customized and/or Personalized, UI sets not included as Default UI sets of the Applications.

2. The method of claim **1,** wherein the step of delivering or distributing Customized and/or Personalized User Interface set not included in the package of UI sets distributed with the operational components of the Application further comprises:
responsive to a request for a specific Customized and/or Personalized UI set during installation of the Application,
retrieving the desired Customized and/or Personalized User Interface sets, if available at Application Developer and/or at OS Application Market and/or at OS Independent Application Market and/or at an Enterprise Server and/or at the Provider of Customized and/or Personalized User Interface sets, and
informing the User if any of the desired Customized and/or Personalized User Interface sets were not retrievable during the installation.

3. The method of claim **1,** wherein the step of delivering or distributing Customized and/or Personalized User Interface set not included in the package of UI sets distributed with the operational components of the Application further comprises:
responsive to a request for changing the Actual User Interface set to an other Default UI set available locally on the Device,
responsive to a request for changing the Actual User Interface set to an other Default UI set by retrieving it, if available, from Application Developer and/or from OS Application Market and/or from OS Independent Application Market and/or from an Enterprise Server and/or from Provider of Customized and/or Personalized User Interface sets,
responsive to a request for changing the Actual User Interface set to an Customized and/or Personalized UI set available locally on the Device,
responsive to a request for changing the Actual User Interface set to an Customized and/or Personalized UI set by retrieving it, if available, from Application Developer and/or from OS Application Market and/or from OS Independent Application Market and/or from an Enterprise Server and/or from Provider of Customized and/or Personalized User Interface sets.

4. The method of claim **1,** wherein the step of delivering or distributing Customized and/or Personalized User Interface set not included in the package of UI sets distributed with the operational components of the Application further comprises:
sending "intent to order" of a desired Customized and/or Personalized UI set from the User's Communications Device or Mobile Computing Device to the Application Developer and/or to the OS Application Market and/or to the OS Independent Application Market and/or to the Enterprise Server and/or to the Provider of Customized and/or Personalized User Interface sets.

5. The method of claim **1,** wherein the step of delivering or distributing Customized and/or Personalized User Interface set not included in the package of UI sets distributed with the operational components of the Application further comprises:
receiving by the Application Developer and/or by the OS Application Market and/or by the OS Independent Application Market and/or by the Enterprise Server of the various "intent to orders" of desired Customized and/or Personalized UI sets sent from the User's Communications Device or Mobile Computing Device and forward them to the Provider of Customized and/or Personalized User Interface sets.

6. The method of claim **1,** wherein the step of delivering or distributing Customized and/or Personalized User Interface set not included in the package of UI sets distributed with the operational components of the Application further comprises:
receiving by the Provider of Customized and/or Personalized User Interface sets of the various "intent to orders" of desired Customized and/or Personalized UI sets sent from the User's Communications Device or Mobile Computing Device,
receiving by the Provider of Customized and/or Personalized User Interface sets of the various "intent to orders" of desired Customized and/or Personalized UI sets collected and forwarded by the Application Developer and/or by the OS Application Market and/or by the OS Independent Application Market and/or by the Enterprise Server.

7. The method of claim **1,** wherein the step of delivering or distributing Customized and/or Personalized User Interface set not included in the package of UI sets distributed with the operational components of the Application further comprises:
sending readiness notification of a desired Customized and/or Personalized UI set by the Provider of Customized and/or Personalized User Interface sets to the User's Device and/or to the Application Developer and/or to the OS Application Market and/or to the OS Independent Application Market and/or to the Enterprise Server,
sending readiness notification of a desired Customized and/or Personalized UI set to the User's Device by the Application Developer and/or by the OS Application Market and/or by the OS Independent Application Market and/or by the Enterprise Server.

8. The method of claim **1,** wherein the step of delivering or distributing Customized and/or Personalized User Interface set not included in the package of UI sets distributed with the operational components of the Application further comprises:
responsive to a readiness notification from the Application Developer and/or from the OS Application Market and/or from the OS Independent Application Market and/or from the Enterprise Server and/or from the Provider of Customized and/or Personalized User Interface sets by downloading the previously requested Customized and/or Personalized UI set.

9. The method of claim **1,** wherein the step of delivering or distributing Customized and/or Personalized User Interface set not included in the package of UI sets distributed with the operational components of the Application further comprises:
manually retrieving a desired Customized and/or Personalized UI set from a server in response to a User request, if it is available on the server,
manually retrieving a desired Customized and/or Personalized UI set from a server in response to a notification of availability from the server.

10. The method of claim **1,** wherein the step of delivering or distributing Customized and/or Personalized User Interface set not included in the package of UI sets distributed with the operational components of the Application further comprises:
automatically retrieving a desired Customized and/or Personalized UI set from a server in response to a notification of availability from the server without requiring user initiation or approval of the retrieval, and
automatically retrieving a desired Customized and/or Personalized UI set from a server in response to a notification of availability from the server with requiring user approval of the retrieval.

11. A system of delivering Customized and/or Personalized User Interface sets for an Application, preferably for performing the method of Claim **1,** comprising:
means for collecting user desires for a specific Customization and/or Personalization of the UI set,
means for delivering, to a Communications Device or Mobile Computing Device on which the Application is installed or running, availability information related to different Customized and/or Personalized UI sets, and
means for delivering, to a Communications Device or Mobile Computing Device on which the Application is installed or running, one or several, Default or Customized and/or Personalized, UI sets not included as Default UI sets of the Applications.

12. A computer program product comprising program code means adapted to perform the method of any of the claims 1 to 9, when the program is run on a Communications Device, on a Mobile Computing Device, or on any computer, comprising:
instructions for collecting user desires for a specific Customization and/or Personalization of the UI set
instructions for delivering, to a Communications Device or Mobile Computing Device on which the Application is installed or running, availability information related to different Customized and/or Personalized UI sets
instructions for delivering , to a Communications Device or Mobile Computing Device on which the Application is installed or running, a set of Customized and/or Personalized UI sets not included in the UI sets distributed with the operational components of the Application.

13. A computer readable storage media for storing a computer program product comprising program code means adapted to perform the method of any of the claims 1 to 9, when the program is run on a client and/or a server computer.
